# EUROPEAN PATENT SPECIFICATION

(11) **EP 3 010 185 B1**
(45) Date of publication and mention of the grant of the patent: **29.08.2018**
(21) Application number: 15189314.6
(22) Date of filing: 12.10.2015
(51) Int. Cl.: H04L 12/64

(54) **SYSTEM AND METHOD FOR FACILITATING COMMUNICATION BETWEEN GSM-R SUBSCRIBER AND TETRA SUBSCRIBER**
SYSTEM UND VERFAHREN ZUR ERLEICHTERUNG DER KOMMUNIKATION ZWISCHEN EINEM GSM-R-TEILNEHMER UND EINEM TETRA-TEILNEHMER
SYSTÈME ET PROCÉDÉ PERMETTANT DE FACILITER LES COMMUNICATIONS ENTRE UN ABONNÉ GSM-R ET UN ABONNÉ TÉTRA

(30) Priority: 15.10.2014 IN 3285MU2014
(43) Date of publication of application: 20.04.2016
(73) Proprietor: Tata Consultancy Services Limited, Mumbai 400 021 (IN)
(72) Inventor: SAVE, Abhijit Shailesh Chandra, 400066 Mumbai (IN); THAKUR, Mayur Gajanan, 400066 Mumbai (IN); SAHA, Subhadip, 400066 Mumbai (IN)
(74) Representative: Heinze, Ekkehard

(56) References cited:
- EP-A1- 1 121 822
- WO-A1-01/45335
- WO-A1-2007/088247
- US-A1- 2003 208 628

## Description

### TECHNICAL FIELD

The present subject matter described herein, in general, relates to a field of communication, and more particularly to system and method for facilitating the communication between a GSM-R subscriber and a TETRA subscriber.

### BACKGROUND

In a radio communication domain, both Terrestrial Trunked Radio (TETRA) and Global System for Mobile Communications Railway (GSM-R) networks have been used to facilitate communication between users of Public Mobile Radio (PMR) systems and Railway systems respectively. The PMR systems are majorly implemented in Police department, Railway department, and Fire Brigade department. Though users of the respective technologies (i.e. TETRA and GSM-R) are capable to establish the communication amongst the same network, establishing the communication between the users of the TETRA network and GSM-R network is a challenge in the radio communication domain.

Since the GSM-R network uses Integrated Services Digital Network (ISDN) User Part (ISUP) or Mobile Application Part (MAP) standards and the TETRA network uses Inter System Interface (ISI) standards, the interconnecting between the TETRA network and the GSM-R network is a challenge due to difference in respective standards. Though there are solutions present in the background art for facilitating the communication between the GSM-R network and the TETRA network but such solutions are dependent on respective vendors facilitating the communication between the users of the TETRA network and GSM-R network.

WO 2007/088247 A1 discloses a mobile communications device for interworking communications system that has a converter that performs protocol conversion for information unit requiring inter-system transfer between source system to target system.

### SUMMARY

The present invention is defined in the appended independent claims to which reference should be made. Advantageous features are set out in the appended dependent claims.

### BRIEF DESCRIPTION OF THE DRAWINGS

The foregoing detailed description of embodiments is better understood when read in conjunction with the appended drawings. For the purpose of illustrating the disclosure, there is shown in the present document example constructions of the disclosure; however, the disclosure is not limited to the specific methods and apparatus disclosed in the document and the drawings.

The detailed description is described with reference to the accompanying figures. In the figures, the left-most digit(s) of a reference number identifies the figure in which the reference number first appears. The same numbers are used throughout the drawings to refer like features and components.
Figure 1 illustrates a network implementation of an interworking gateway for facilitating to-and-fro communication between a first subscriber and a second subscriber, in accordance with an embodiment of the present subject matter.
Figure 2 illustrates the interworking gateway, in accordance with an embodiment of the present subject matter.
Figures 3 and 4 are working examples of the interworking gateway, in accordance with an embodiment of the present subject matter.
Figure 5 illustrates a method for facilitating the to-and-fro communication between the first subscriber and the second subscriber, in accordance with an embodiment of the present subject matter.

### DETAILED DESCRIPTION

Some embodiments of this disclosure, illustrating all its features, will now be discussed in detail. The words "comprising," "having," "containing," and "including," and other forms thereof, are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise. Although any systems and methods similar or equivalent to those described herein can be used in the practice or testing of embodiments of the present disclosure, the exemplary, systems and methods are now described. The disclosed embodiments are merely exemplary of the disclosure, which may be embodied in various forms.

Various modifications to the embodiment will be readily apparent to those skilled in the art and the generic principles herein may be applied to other embodiments. However, one of ordinary skill in the art will readily recognize that the present disclosure is not intended to be limited to the embodiments illustrated, but is to be accorded the widest scope consistent with the principles and features described herein.

In order to overcome a challenge of facilitating a communication between a Global System for Mobile Communications Railway (GSM-R) network and a Terrestrial Trunked Radio (TETRA) network due to dissimilarities in their respective standard, the communication between the GSM-R network and the TETRA network may be facilitated by means of an interworking gateway. In one aspect, the interworking gateway is located at a location of the GSM-R network or the location other than the location of GSM-R network. The present subject matter provides the method for facilitating to-and-fro communication between one or more GSM-R subscribers of the GSM-R network and a TETRA subscriber of the TETRA network. The to-and-fro communication may be facilitated by at least one of a Point-to-Point Call (PtP) system, a Voice Group Call Service (VGCS), and a Voice Broadcast Service (VBS). In one aspect, the GSM-R subscribers may be served by anchor Mobile Switching Centre (MSC-A). The TETRA subscriber, on the other hand, may be served by the Switching and Management infrastructure (SwMI).

It may be understood that the GSM-R network is an international wireless communications standard for railway communication and applications. For example, a European Rail Traffic Management System (ERTMS) uses the GSM-R network for communication between train and railway regulation control centers. The ERTMS is based on Global System for Mobile (GSM) and EIRENE - Mobile Radio for Railways Networks in Europe (MORANE) specifications that facilitates performance at speeds up to 500 km/h (310 mph), without any communication loss. In addition, the GSM-R further facilitates a plurality of features. Examples of the plurality of features may include, but not limited to, Point-to-Point (PtP) call, Voice Group Call System (VGCS), Voice Broadcast System (VBS), and Railways Emergency Call (REC).

The TETRA network, on the other hand, is a standard for radio communication. The TETRA network is developed by European Telecommunications Standards Institute (ETSI) for private mobile radio (PMR). It may be understood that the TETRA network uses Time division multiple access (TDMA) technology for spectrum usage and trunked system for network usage. In one aspect, the TETRA network facilitates one-to-one and one-to-many radio communication using voice and data services along with PMR services. The PMR services may include, but not limited to, push to talk service, Group Call, Security, and Direct Mode Operation (DMO).

In order to facilitate the to-and-fro communication, the interworking gateway receives an Integrated Services Digital Network (ISDN) User Part (ISUP) message from the GSM-R subscribers via an anchor Mobile Switching Centre (MSC-A). Upon receiving the ISUP message, an Inter System Interface (ISI) message may be selected, from a set of ISI messages, equivalent to the first ISUP message. The ISI message may be selected by the interworking gateway as the interworking gateway is capable of mapping the ISUP message with the ISI message or vice versa thereby facilitating the to-and-fro communication between the GSM-R subscribers and the TETRA subscriber.

For example, in a typical group call scenario, consider 3 GSM-R subscribers of the GSM-R network are involved in the group call served by the MSC-A. Now in order to extend the group call from the GSM-R network to the TETRA network, a GSM subscriber, of the 3 GSM-R subscribers, and a TETRA subscriber transmits one or more messages in their respective protocols (i.e. ISUP and ISI respectively) via the interworking gateway. The one or more messages may include a first ISUP message and a second ISUP message transmitted by the GSM-R subscriber. The one or more messages may further include a first ISI message and a second ISI message transmitted by the TETRA subscriber. The interworking gateway, upon receiving respective messages from the GSM subscriber and the TETRA subscriber, maps the first ISUP message with the first ISI message. In one aspect, the first ISUP message is equivalent to the first ISI message. Similarly the interworking gateway maps the second ISI message with the second ISUP message corresponding to the second ISI message. Based on the mapping by the interworking gateway, the TETRA subscriber may be included in the group call and communication with 3 GSM-R subscribers irrespective of the dissimilarities in their respective protocols.

Therefore, in this manner, the present subject matter provides a method for facilitating the to-and-fro communication between the GSM-R subscribers and the TETRA subscriber in a vendor independent approach by using the interworking gateway.

While aspects of described system hereinafter referred to as an interworking gateway and method for facilitating to-and-fro communication between a GSM-R subscriber and a TETRA subscriber and may be implemented in any number of different computing systems, environments, and/or configurations, the embodiments are described in the context of the following exemplary system.

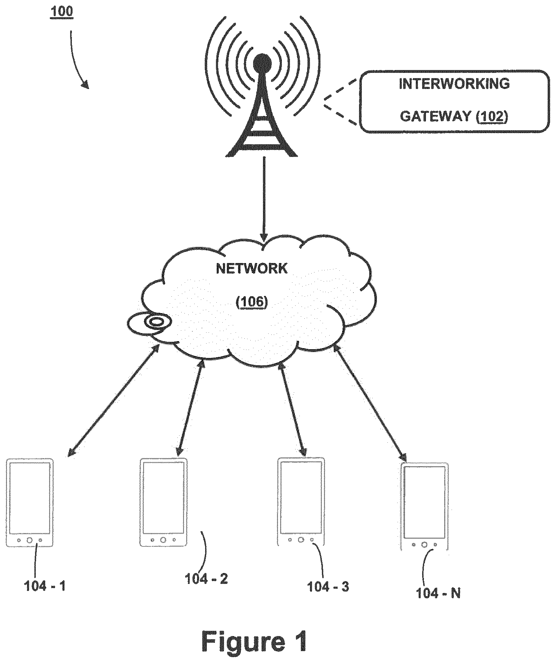

Referring now to Figure 1, a network implementation 100 of an interworking gateway 102 for facilitating to-and-fro communication between a GSM-R subscriber and a TETRA subscriber is illustrated, in accordance with an embodiment of the present subject matter. In one embodiment, the interworking gateway 102 receives a first Integrated Services Digital Network (ISDN) User Part (ISUP) message of a set of ISUP messages. The first ISUP message indicates a request for initiating a communication between an anchor Mobile Switching Centre (MSC-A) and a Switching and Management infrastructure (SwMI). In one aspect, the MSC-A serves the first subscriber in the GSM-R network and the SwMI serves the second subscriber in the TETRA network. It may be understood that the set of ISUP messages may be based on an ISUP protocol. Upon receiving the ISUP message, the interworking gateway 102 selects a first ISI message from a set of ISI messages. In one aspect, the first ISI message is equivalent to the first ISUP message. The first ISI message may be selected based on a pre-defined mapping of the first ISUP message with the first ISI message. In one aspect, the set of ISI messages may be based on an ISI protocol. Subsequent to the selection the first ISI message, the interworking gateway 102 transmits the first ISI message to the SwMI. Upon transmitting the first ISI message, the interworking gateway 102 receives a second ISI message from the SwMI. The second ISI message indicates that the second subscriber accepts the request of the first subscriber for the communication. After receiving the second ISI message, a second ISUP message, equivalent to the second ISI message, may be selected from the set of ISUP messages. The second ISUP message may be selected based on the pre-defined mapping of the second ISI message with the second ISUP message. Based on the selection of the second ISUP message, the interworking gateway 102 transmits the second ISUP message to the MSC-A, thereby facilitating the to-and-fro communication between the first subscriber present in the GSM-R network and the second subscriber present in the TETRA network.

Although the present subject matter is explained considering that the interworking gateway 102 is implemented on a server, it may be understood that the interworking gateway 102 may also be implemented in a variety of computing systems, such as a network server. It will be understood that the interworking gateway 102 may be accessed by multiple users through one or more user devices 104-1, 104-2...104-N, collectively referred to as user devices 104. The user devices 104 are communicatively coupled to the interworking gateway 102 through a network 106. In one aspect, the user devices 104 are associated to GSM-R network and TETRA network.

In one implementation, the network 106 may be a wireless network, a wired dedicated network or a combination thereof. The network 106 can be implemented as one of the different types of networks, such as intranet, local area network (LAN), wide area network (WAN), the internet, and the like. The network 106 may either be a dedicated network or a shared network. The shared network represents an association of the different types of networks that use a variety of protocols, for example, Hypertext Transfer Protocol (HTTP), Transmission Control Protocol/Internet Protocol (TCP/IP), Wireless Application Protocol (WAP), and the like, to communicate with one another. Further the network 106 may include a variety of network devices, including routers, bridges, servers, computing devices, storage devices, and the like.

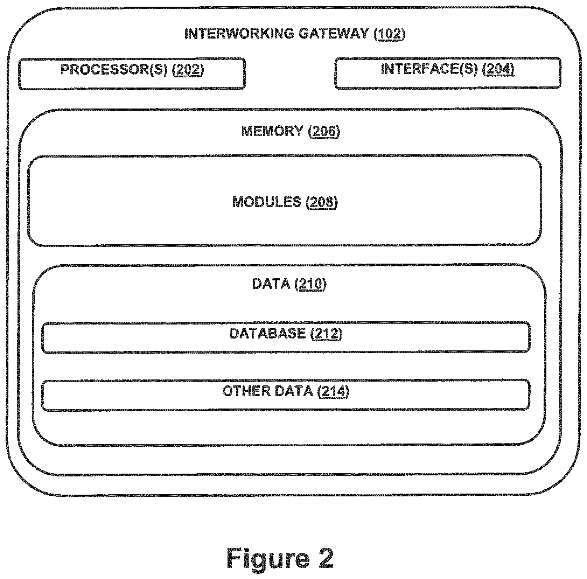

Referring now to Figure 2, the interworking gateway 102 is illustrated in accordance with an embodiment of the present subject matter. In one embodiment, the system 102 may include at least one processor 202, an input/output (I/O) interface 204, and a memory 206. The at least one processor 202 may be implemented as one or more microprocessors, microcomputers, microcontrollers, digital signal processors, central processing units, state machines, logic circuitries, and/or any devices that manipulate signals based on operational instructions. Among other capabilities, the at least one processor 202 is configured to fetch and execute computer-readable instructions stored in the memory 206.

The I/O interface 204 may include a variety of software and hardware interfaces, for example, a graphical user interface, and the like. The I/O interface 204 may allow the interworking gateway 102 to interact with the user directly or through the client devices 104. The I/O interface 204 may include one or more ports for connecting a number of devices to one another or to another server.

The memory 206 may include any computer-readable medium or computer program product known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. The memory 206 may include modules 208 and data 210.

The modules 208 include routines, programs, objects, components, data structures, etc., which perform particular tasks or implement particular abstract data types. The modules 208 may include programs or coded instructions that supplement applications and functions of the interworking gateway 102. In one aspect, tasks associated to the modules 208 may include, but not limited, to trunk provisioning, message parsing, message mapping, OA&M and translations.

The data 210, amongst other things, serves as a repository for storing data processed, received, and generated by one or more of the modules 208. The data 210 may also include a system database 212 and other data 214. The other data 214 may include data generated as a result of the execution of the modules 208.

In one implementation, at first, a user may use the client devices 104 to access the interworking gateway 102 via the I/O interface 204. In one aspect, the user may accesses the I/O interface 204 of the interworking gateway 102 for facilitating to-and-fro communication between a first subscriber and a second subscriber. In order to facilitate the to-and-fro communication, the interworking gateway 102 may be employed. The detailed working of the interworking gateway 102 is described below.

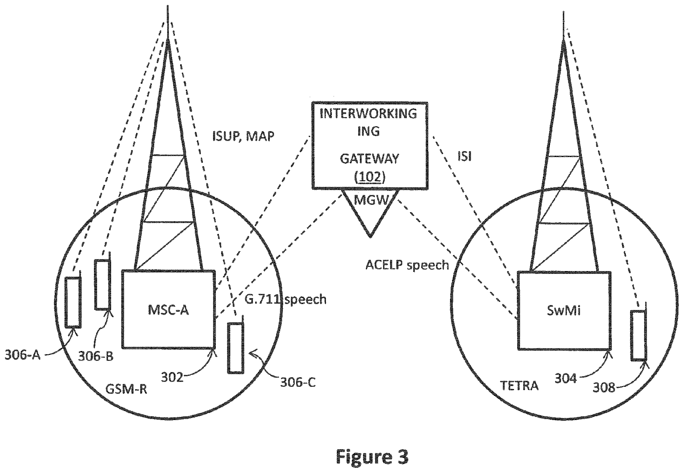

Now referring to figure 3. The figure 3 illustrates a block diagram indicating communication between the first subscriber 306-A and the second subscriber 308 via the interworking gateway 102. In one embodiment, the interworking gateway 102 may also be implemented as a software enhancement on the GSM-R network. In one embodiment, the interworking gateway 102, initially, receives a first Integrated Services Digital Network (ISDN) User Part (ISUP) message of a set of ISUP messages from the first subscriber 306-A. In another embodiment, interworking gateway 102 may receive a Mobile Application Part (MAP) message, of a set of MAP messages, from the first subscriber 306-A. It may be understood that the first ISUP message and the MAP message are based on the ISUP protocol and MAP protocol respectively. The set of ISUP messages may comprise IAM message, CPG message, ACM message, ANM message, and GSM message. The set of MAP messages may comprise a FORWARD GROUP CALL SIGNALLING message, a PROCESS GROUP CALL SIGNALLING message and a PREPARE_GROUP_CALL_SIGNALLING message.

In one aspect, the first ISUP message indicates a request for initiating a communication between an anchor Mobile Switching Centre (MSC-A) 302 and a Switching and Management infrastructure (SwMI) 304. It may be understood that the set of ISUP messages are based on an ISUP protocol. Examples of the set of ISUP messages may include, but not limited to, IAM message, CPG message, ACM message, ANM message, and GSM message. In one aspect, the first subscriber 306-A is on a Global System for Mobile Communications Railway (GSM-R) network and the second subscriber 308 is on a Terrestrial Trunked Radio (TETRA) network. In one aspect, the MSC-A 302 serves the first subscriber 306-A of the GSM-R network. The SwMI 304, on the other hand, serves the second subscriber 308 of the TETRA network.

Upon receiving the first ISUP message, the interworking gateway 102 selects a first Inter System Interface (ISI) message from a set of ISI messages. In one embodiment, the interworking gateway 102 may also select a Q-Signaling (QSIG) message from a set of QSIG messages. In one aspect, the set of ISI messages and the set of QSIG messages are based on an ISI protocol. Examples of the set of ISI messages may include, but not limited to, an ISI-SETUP message, an ISI-PROGRESS message, an ISI-ALERTING message, an ISI-CONNECT message, an ISI-DISCONNECT message, an ISI TX-GRANTED message, an ISI TX-CEASED message and an ISI TX-DEMAND message. Examples of the set of QSIG messages may include, but not limited to, SETUP, CALL PROCEEDING, ALERTING, CONNECT, DISCONNECT, and FACILITY. In one aspect, the set of ISUP messages and the set of ISI messages, resided in a table, are stored in a system database 212. The table comprises a first column that stores the set of ISUP messages and the set of MAP messages. The table further comprises a second column that stores the set of ISI messages and the set of QSIG messages. In one embodiment, the table is configured in manner such that each ISUP message or each MAP message is mapped with an ISI message or a QSIG message from the set of ISI messages or the set of QSIG messages respectively. In other words, the ISUP message or the MAP message mapped with the ISI message or the QSIG are equivalent.

In one example, the mapping of each ISUP message or each MAP message with the ISI message or the QSIG message or vice versa as is shown below in the table:

| **ISUP / MAP** | **QSIG** | **ISI PDU** |
|---|---|---|
| IAM | SETUP | ISI-SETUP |
| CPG | CALL PROCEEDING | ISI-PROGRESS |
| ACM | ALERTING | ISI-ALERTING |
| ANM | CONNECT | ISI-CONNECT |
| REL | DISCONNECT | ISI-DISCONNECT |
| FORWARD_GROUP_CALL_SIGNALLING | FACILITY | ISI-TX GRANTED |
| PROCESS_GROUP_CALL_SIGNALLING | FACILITY | ISI-TX DEMAND |

The interworking gateway 102, upon receiving the first ISUP message, selects a first ISI message from the set of ISI messages by referring the table. It may be understood upon referring to the table that the first ISI message is equivalent to the first ISUP message. Once the interworking gateway 102 determines the first ISUP message equivalent, the interworking gateway 102 transmits the first ISI message to the second subscriber 308 via the SwMI 304. It may be understood that if the second subscriber 308 is available to connect with the first subscriber 306-A, the second subscriber 308, in response to the first ISI message, transmits a second ISI message to the interworking gateway 102 via the SwMI 304. Upon receiving the second ISI message from the SwMI 304, the interworking gateway 102 again refer to the table in order to determine equivalent of the second ISI message. Upon referring the table, it may be understood that a second ISUP message is equivalent to the second ISI message, the interworking gateway 102 then transmits the second ISUP message to the first subscriber 306-A via the MSC-A 302. Thus, in this manner, the first subscriber 306-A and the second subscriber 308 may communicate each other despite of the dissimilarities in their respective protocols.

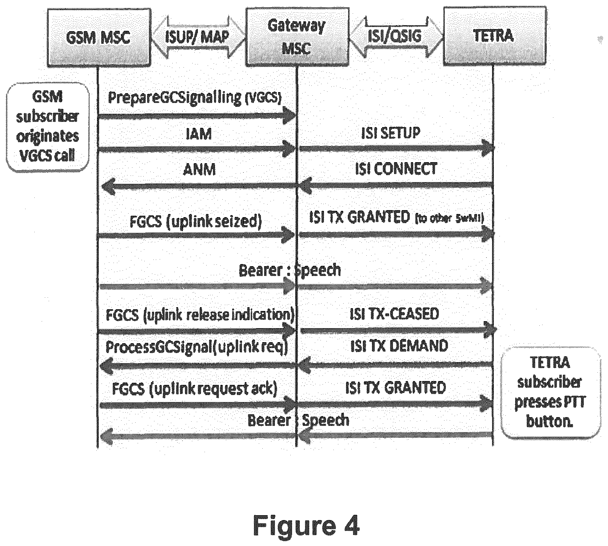

Now referring to figure 4. In order to understand the working of the interworking gateway 102 for facilitating to-and-fro communication between the first subscriber 306-A and the second subscriber 308, consider an example illustrating a step by step process performed by the interworking gateway 102 facilitating the to-and-fro communication between the first subscriber 306-A and the second subscriber 308. The first subscriber 306-A and the second subscriber 308 are hereinafter referred to as a GSM-R subscriber and a TETRA subscriber in this embodiment.

In order to facilitate the to-and-fro communication, at first step, the GSM-R subscriber transmits a request to the MSC-A 302 for initiating a Voice Group Call System (VGCS) call between the GSM-R subscriber along with other GSM-R subscribers and the TETRA subscriber. It may be understood that the MSC-A 302 serves the GSM-R subscriber and the other GSM-R subscribers. Upon receiving the request, the MSC-A 302 transmits a PREPARE_GROUP_CALL_SIGNALLING message, of the set of MAP messages, to the interworking gateway 102. Upon receiving the PREPARE_GROUP_CALL_SIGNALLING message, the interworking gateway 102 allocates a group call number to the request received from the MSC-A 302 in order to facilitate the VGCS call. In one aspect, the group call number is unique identification number for identifying a specific group call number amongst a plurality of VGCS call initiated by distinct GSM-R subscribers via distinct MSC-A.

The MSC-A 302 then transmits an IAM message, of the set of ISUP messages, to the interworking gateway 102 in order to establish a communication channel between the GSM-R subscriber along with the other GSM-R and the TETRA subscriber served by the SwMI 304. In one aspect, the IAM message is based on an ISUP protocol.

Upon receiving the IAM message, the interworking gateway 102 refers the table and thereby selects an ISI-SETUP message from the set of ISI messages. It may be understood that the ISI-SETUP message is based on an ISI protocol and further the ISI-SETUP message is equivalent to the IAM message. The interworking gateway 102 then transmits the ISI-SETUP message to the TETRA subscriber via the SwMI 304.

Since the SwMI 304 is capable of understanding one or more messages based on the ISI protocol, the SwMI 304 establishes the communication channel with TETRA subscriber 308 through Air Interface (AIF signaling). The SwMI 304 establishes the communication channel with interworking gateway 102 by transmitting an ISI CONNECT message, of the set of ISI messages, to the interworking gateway 102. Upon receiving the ISI CONNECT message, the interworking gateway 102 selects an ANM message of the set of ISUP messages upon referring the table. The ANM message is based on the ISUP protocol. The ANM message is then transmitted by the interworking gateway 102 to the GSM-R subscriber via the MSC-A 302. Thus, in this manner, the communication channel may be established between the GSM-R subscriber along with the other GSM-R and the TETRA subscriber.

Once the communication channel is established, the GSM-R subscriber via the MSC-A 302 transmits a request for seizing an uplink. The uplink is seized by transmitting a FORWARD_GROUP_CALL_SIGNALLING SEIZE message to the interworking gateway 102. The FORWARD_GROUP_CALL_SIGNALLING SEIZE message has a flag indicating that the GSM-R subscriber seizes the uplink for transmitting voice data packets over the communication channel. In one aspect, the FORWARD_GROUP_CALL_SIGNALLING SEIZE message is based on the MAP protocol.

The interworking gateway 102 then refers the table and thereby selects an ISI TX-GRANTED, from the set of ISI messages, equivalent to the FORWARD_GROUP_CALL_SIGNALLING SEIZE message. In one aspect, the ISI TX-GRANTED message is based on the ISI protocol. The ISI TX-GRANTED is then transmitted by the interworking gateway 102 to the TERTA subscriber via the SwMI 304. In one aspect, the ISI TX-GRANTED indicates that only the GSM-R subscriber is capable for transmitting the voice data packets whereas the TETRA subscriber is only capable to receive the voice data packets until the uplink is released by the GSM-R subscriber.

Once the uplink is seized, the GSM-R subscriber transmits the voice data packets over the communication channel, wherein the voice data packets are received by the other GSM-R subscribers and the TETRA subscriber. Once the GSM-R subscriber is done with the transmission of the voice data packets, the GSM-R subscriber transmits a FORWARD_GROUP_CALL_SIGNALLING RELEASE message, via the MSC-A 302, to the interworking gateway 102. The FORWARD_GROUP_CALL_SIGNALLING RELEASE message has a flag indicating that the GSM-R subscriber releases the uplink. It may be understood that once the uplink is released by the GSM-R subscriber, the uplink may be seized by one of the other GSM-R subscriber or the TETRA subscriber. In one aspect, the FORWARD_GROUP_CALL_SIGNALLING RELEASE message is based on the MAP protocol.

Upon receiving the FORWARD_GROUP_CALL_SIGNALLING RELEASE message, the interworking gateway 102 refers the table and thereby selects an ISI TX-CEASED message equivalent to the FORWARD_GROUP_CALL_SIGNALLING RELEASE message by referring the table. In one aspect, the ISI TX- CEASED message is based on the ISI protocol. The interworking gateway 102 then transmits the ISI TX-CEASED message to the TETRA subscriber via the SwMI 304.

One the ISI TX-CEASED message is transmitted, the TETRA subscriber transmits a request for seizing the uplink. The uplink is seized by transmitting an ISI-TX DEMAND message, of the set of ISI messages, to the interworking gateway 102. The ISI-TX DEMAND message indicates a flag indicating that the TETRA subscriber seizes the uplink for transmitting voice data packets over the communication channel. In one aspect, the ISI-TX DEMAND message is based on the ISI protocol. The TETRA subscriber, via the SwMI 304, transmits the ISI-TX DEMAND to the interworking gateway 102.

The interworking gateway 102, upon receiving the ISI-TX DEMAND message, refers the table and thereby selects a PROCESS_GROUP_CALL_SIGNALLING message, from the set of ISUP messages, equivalent to the ISI-TX DEMAND message. In one aspect, the PROCESS_GROUP_CALL_SIGNALLING message is based on the MAP protocol. The interworking gateway 102 then transmits the PROCESS_GROUP_CALL_SIGNALLING message to the GSM-R subscriber via the MSC-A 302.

Upon receiving the PROCESS_GROUP_CALL_SIGNALLING message, the GSM-R subscriber transmits a FORWARD_GROUP_CALL_SIGNALLING message to the interworking gateway 102 via the MSC-A 302. The FORWARD_GROUPCALL_SIGNALLING message has a flag indicating that the GSM-R subscriber acknowledges the uplink request and TETRA subscriber is granted the uplink for transmission.

The interworking gateway 102 then refers the table and thereby selects an ISI TX-GRANTED message equivalent to a FORWARD_GROUP_CALL_SIGNALLING message. In one aspect, the ISI TX-GRANTED message is based on the ISI protocol. The interworking gateway 102 then transmits the ISI TX- GRANTED message to the TETRA subscriber via the SwMI 304. In one aspect, the ISI TX- GRANTED message indicates that the TETRA subscriber may transmit the voice data packets to the GSM-R subscriber and the other GSM-R subscribers over the communication channel.

In one embodiment, the voice data packets may be transmitted by encoding the voice data packets into a High level Data Link Control (HDLC) frame structure. Upon encoding, the voice data packets may then relayed over a 64 kbit/s slot on a 2 Mbit/s E1 link-B channel. It may be understood that the voice data packets are in Algebraic code-excited linear prediction (ACELP) speech frames. In order to translate transcoding software may be implemented to translate the ACELP speech frames into voice signals. In one aspect, the transcoding software comprises an ACELP decoder and a G.711 decoder. The ACELP decoder decodes the ACELP speech frames into PCM signals. Upon decoding the ACELP speech frames, the G.711 decoder encodes the PCM signals into the voice signals. Thus, in this manner, the voice data packets are translated into the voice signals and thus transmitted to the GSM-R subscriber and the other the GSM-R subscribers over to the communication channel.

Based on the aforementioned description, the interworking gateway 102 facilitates the VGCS call between the GSM-R subscriber along with other GSM-R subscribers and the TETRA subscriber thereby facilitating the to-and-fro communication.

Exemplary embodiments discussed above may provide certain advantages. Though not required to practice aspects of the disclosure, these advantages may include those provided by the following features.

Some embodiments enable a system and a method to facilitate a cost effective manner for facilitating two-and-fro communication between a GSM-R subscriber and a TETRA subscriber in a vendor independent approach.

The to-and-fro communication between the GSM-R network and the TETRA network proved to be helpful in crisis situations (such as railway mishap or accident) rather than relying on disaster prone public networks. In one aspect, the communication between railway networks (using GSM-R network) and a fire brigade/security network (using TETRA network) aids in rescue operations.

Some embodiments enable the system and the method to translate ISUP and MAP messages to ISI messages and vice-versa for interworking between a GSM-R network and a TETRA network.

Some embodiments enable the system and the method that facilitates to extend a group/conference calls from the GSM-R subscriber to the TETRA subscriber.

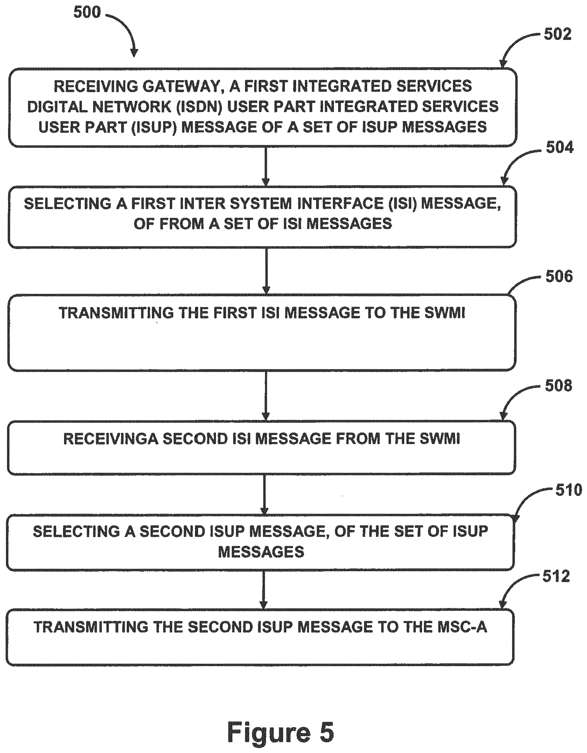

Referring now to Figure 5, a method 500 for determining an expert of one or more subjects on a server-based platform is shown, in accordance with an embodiment of the present subject matter. The method 500 may be described in the general context of computer executable instructions. Generally, computer executable instructions can include routines, programs, objects, components, data structures, procedures, modules, functions, etc., that perform particular functions or implement particular abstract data types. The method 500 may also be practiced in a distributed computing environment where functions are performed by remote processing devices that are linked through a communications network. In a distributed computing environment, computer executable instructions may be located in both local and remote computer storage media, including memory storage devices.

The order in which the method 500 is described is not intended to be construed as a limitation, and any number of the described method blocks can be combined in any order to implement the method 500 or alternate methods. Additionally, individual blocks may be deleted from the method 500. Furthermore, the method can be implemented in any suitable hardware, software, firmware, or combination thereof. However, for ease of explanation, in the embodiments described below, the method 500 may be considered to be implemented as described in the interworking gateway 102.

At block 502, a first Integrated Services Digital Network (ISDN) User Part (ISUP) message of a set of ISUP messages may be received. In one aspect, the first ISUP message indicates a request for initiating a communication between an anchor Mobile Switching Centre (MSC-A) and a Switching and Management infrastructure (SwMI). It may be understood that the MSC-A serves the first subscriber in the GSM-R network and the SwMI serves the second subscriber in the TETRA network. In one aspect the set of ISUP messages are based on an ISUP protocol.

At block 504, a first Inter System Interface (ISI) message may be selected from a set of ISI messages. In one aspect, the ISI message is equivalent to the first ISUP message. The first ISI message may be selected based on a pre-defined mapping of the first ISUP message with the first ISI message. In one aspect the set of ISI messages are based on an ISI protocol.

At block 506, the first ISI message to the SwMI may be transmitted.

At block 508, a second ISI message from the SwMI may be received. In one aspect, the second ISI message indicates that the second subscriber accepts the request of the first subscriber for the communication.

At block 510, a second ISUP message of the set of ISUP messages may be selected. In one aspect, the second ISUP message is equivalent to the second ISI message. The second ISUP message may be selected based on the pre-defined mapping of the second ISI message with the second ISUP message.

At block 512, the second ISUP message may be transmitted to the MSC-A thereby facilitating to-and-fro communication between the first subscriber present in the GSM-R network and the second subscriber present in the TETRA network.

Although implementations for methods and systems for determining the expert of the one or more subjects on the server-based platform have been described in language specific to structural features and/or methods, it is to be understood that the appended claims are not necessarily limited to the specific features or methods described. Rather, the specific features and methods are disclosed as examples of implementations for determining the expert of the one or more subjects.

## Claims

1. A method for facilitating to-and-fro communication between a first subscriber (306-A) and a second subscriber (308), wherein the first subscriber (306-A) is on a Global System for Mobile Communications Railway, GSM-R network and the second subscriber (308) is on a Terrestrial Trunked Radio, TETRA network, the method comprising:
mapping GSM-R Integrated Services Digital Network, ISDN User Part, ISUP messages with TETRA Inter System Interface, ISI messages for establishing a communication channel between the first subscriber (306-A) on the GSM-R network and the second subscriber (308) on the TETRA network, wherein establishing the communication channel comprises the steps of:
receiving, by an interworking gateway (102), a first ISUP message of a set of ISUP messages, wherein the first ISUP message indicates a request for initiating a communication between an anchor Mobile Switching Centre, MSC-A (302) and a Switching and Management infrastructure, SwMI (304), and wherein the MSC-A (302) serves the first subscriber (306-A) in the GSM-R network, and wherein the SwMI (304) serves the second subscriber (308) in the TETRA network, and wherein the set of ISUP messages are based on an ISUP protocol and wherein the set of ISUP messages comprises IAM message, CPG message, ACM message, ANM message, and GSM message;
selecting, by the interworking gateway (102), a first ISI message from a set of ISI messages, equivalent to the first ISUP message, wherein the first ISI message is selected based on a pre-defined mapping of the first ISUP message with the first ISI message, wherein the set of ISI messages are based on an ISI protocol, wherein the set of ISI messages comprises an ISI-SETUP message, an ISI-ALERTING message, an ISI-CONNECT message, an ISI-DISCONNECT message, an ISI TX-GRANTED message, an ISI TX-DEMAND message, and an ISI TX-CEASED message;
transmitting, by the interworking gateway (102), the first ISI message to the SwMI (304);
receiving, by the interworking gateway (102), a second ISI message from the SwMI (304), wherein the second ISI message indicates that the second subscriber (308) accepts the request of the first subscriber (306-A) for the communication;
selecting, by the interworking gateway (102), a second ISUP message, from the set of ISUP messages, equivalent to the second ISI message, wherein the second ISUP message is selected based on the pre-defined mapping of the second ISI message with the second ISUP message; and
transmitting, by the interworking gateway (102), the second ISUP message to the MSC-A (302);
mapping GSM-R Mobile Application Part, MAP messages with the TETRA Inter System Interface, ISI messages for seizing an uplink to transmit voice data packets between the first subscriber (306-A) on the GSM-R network and the second subscriber (308) on the TETRA network, wherein seizing the uplink comprises the steps of:
receiving, by the interworking gateway (102), a first MAP message of a set of MAP messages wherein the first MAP message indicates a request for initiating a communication between the MSC-A and the SwMI (304) and wherein the MSC-A (302) serves the first subscriber in the GSM-R network, and wherein the SwMI (304) serves the second subscriber in the TETRA network, and wherein the set of MAP messages are based on a MAP protocol, wherein the set of MAP messages comprises a FORWARD GROUP CALL SIGNALLING RELEASE message, a FORWARD_GROUP_CALL_SIGNALLING SEIZE message a PROCESS GROUP CALL SIGNALLING message and a PREPARE_GROUP_CALL_SIGNALLING message;
electing, by the interworking gateway (102), a third ISI message, from the set of ISI messages equivalent to the first MAP message, wherein the third ISI message is selected based on a pre-defined mapping of the first MAP message with the third ISI message, wherein the set of ISI messages are based on the ISI protocol;
transmitting, by the interworking gateway (102), the third ISI message to the SwMI (304);
receiving, by the interworking gateway (102), a fourth ISI message from the SwMI (304);
selecting, by the interworking gateway (102), a second MAP message, from the set of MAP messages, equivalent to the fourth ISI message, wherein the second MAP message is selected based on the pre-defined mapping of the fourth ISI message with the second MAP message; and
transmitting, by the interworking gateway, the second MAP message to the MSC-A (302).

2. The method of claim 1, wherein the IAM message and the ISI-SETUP message facilitates to establish the communication channel between the first subscriber (306-A) and the second subscriber (308).

3. The method of claim 1, wherein the ISI-SETUP message, the ISI-ALERTING message, the ISI-CONNECT message are transmitted by the SwMI (304) to the interworking gateway (102).

4. The method of claim 1, wherein the ISI-SETUP message, the ISI-ALERTING message, and the ISI-CONNECT message are mapped to the CPG message, the ACM message, and the ANM message respectively, and wherein the ISI TX-GRANTED message, the ISI TX-CEASED message, and the ISI-TX DEMAND message are mapped to the FORWARD GROUP CALL SIGNALLING SEIZE message, the FORWARD GROUP CALL SIGNALLING RELEASE message, and the PROCESS GROUP CALL SIGNALLING message.

5. The method of claim 4, wherein the to-and-fro communication is facilitated by at least one of a Point-to-Point PtP Call, a Voice Group Call Service VGCS, and a Voice Broadcast Service VBS.

6. The method of claim 1, wherein the interworking gateway (102) is located at a location of the GSM-R network or a location other than the location of the GSM-R network.

7. The method of claim 1 further comprises transmitting voice data packets, over the communication channel between the first subscriber (306-A) on the GSM-R network and the second subscriber (308) on the TETRA network, and releasing the uplink after the transmission of the voice data packets is over.

8. An interworking gateway for facilitating to-and-fro communication between a first subscriber (306-A) and a second subscriber (308), wherein the first subscriber (306-A) is on a Global System for Mobile Communications Railway, GSM-R network and the second subscriber (308) is on a Terrestrial Trunked Radio, TETRA network, the interworking gateway comprising:
a processor (202); and
a memory (206), coupled to the processor (202), storing instructions that, when executed by the processor (202), cause the processor (202) to
map GSM-R Integrated Services Digital Network, ISDN User Part, ISUP messages with TETRA Inter System Interface, ISI messages to establish a communication channel between the first subscriber (306-A) on the GSM-R network and the second subscriber (308) on the TETRA network, wherein to establish the communication channel,
receive a first Integrated Services Digital Network, ISDN User Part, ISUP message of a set of ISUP messages, wherein the first ISUP message indicates a request for initiating a communication between an anchor Mobile Switching Centre, MSC-A (302) and a Switching and Management infrastructure, SwMI (304), and wherein the MSC-A (302) serves the first subscriber (306-A) in the GSM-R network, and wherein the SwMI (304) serves the second subscriber (308) in the TETRA network, and wherein the set of ISUP messages are based on an ISUP protocol, and wherein the set of ISUP messages comprises IAM message, CPG message, ACM message, ANM message, and GSM message;
select a first Inter System Interface, ISI message, from a set of ISI messages, equivalent to the first ISUP message, wherein the first ISI message is selected based on a pre-defined mapping of the first ISUP message with the first ISI message, wherein the set of ISI messages are based on an ISI protocol, wherein the set of ISI messages comprises an ISI-SETUP message, an ISI-ALERTING message, an ISI-CONNECT message, an ISI-DISCONNECT message, an ISI TX-GRANTED message, an ISI TX-DEMAND message, and an ISI TX-CEASED message;
transmit the first ISI message to the SwMI (304);
receive a second ISI message from the SwMI (304), wherein the second ISI message indicates that the second subscriber accepts the request of the first subscriber (306-A) for the communication;
select a second ISUP message, from the set of ISUP messages, equivalent to the second ISI message, wherein the second ISUP message is selected based on the pre-defined mapping of the second ISI message with the second ISUP message; and
transmit the second ISUP message to the MSC-A (302);
map GSM-R Mobile Application Part, MAP messages with the TETRA Inter System Interface, ISI messages to seize an uplink to transmit voice data packets between the first subscriber (306-A) on the GSM-R network and the second subscriber (308) on the TETRA network, wherein to seize the uplink,
receive a first MAP message of a set of MAP messages wherein the first MAP message indicates a request for initiating a communication between the MSC-A (302) and the SwMI (304) and wherein the MSC-A (302) serves the first subscriber in the GSM-R network, and wherein the SwMI (304) serves the second subscriber in the TETRA network, and wherein the set of MAP messages are based on a MAP protocol, wherein the set of MAP messages comprises a FORWARD GROUP CALL SIGNALLING RELEASE message, a FORWARD_GROUP_CALL_SIGNALLING SEIZE message a PROCESS GROUP CALL SIGNALLING message and a PREPARE_GROUP_CALL_SIGNALLING message;
select a third ISI message, from the set of ISI messages equivalent to the first MAP message, wherein the third ISI message is selected based on a pre-defined mapping of the first MAP message with the third ISI message, wherein the set of ISI messages are based on the ISI protocol;
transmit the third ISI message to the SwMI (304);
receive a fourth ISI message from the SwMI (304);
select a second MAP message, from the set of MAP messages, equivalent to the fourth ISI message, wherein the second MAP message is selected based on the pre-defined mapping of the fourth ISI message with the second MAP message; and transmitting, by the interworking gateway (102), the second MAP message to the MSC-A (302).

9. The interworking gateway (102) of claim 8, wherein the interworking gateway is located at a location of the GSM-R network or a location other than the location of the GSM-R network.

10. The interworking gateway of claim 8 further comprises the processor (202) to execute the programmed instructions to transmit voice data packets, over the communication channel between the first subscriber (306-A) on the GSM-R network and the second subscriber (308) on the TETRA network and releasing the uplink after the transmission of the voice data packets is over.

11. A computer program comprising instructions which, when the program is executed by a computer, cause the computer to carry out all the steps of the method according to claims 1 or 7.

## Patentansprüche

1. Verfahren zum Ermöglichen einer Hin-und-Her-Kommunikation zwischen einem ersten Teilnehmer (306-A) und einem zweiten Teilnehmer (308), wobei sich der erste Teilnehmer (306-A) auf einem Global-System-for-Mobile-Communications-Railway- bzw. GSM-R-Netz befindet und sich der zweite Teilnehmer (308) auf einem Terrestrial-Trunked-Radio- bzw. TETRA-Netz befindet, wobei das Verfahren Folgendes umfasst:
Abbilden von GSM-R-Integrated-Services-Digital-Network- bzw. -ISDN-User-Part-Nachrichten bzw. -ISUP-Nachrichten zu TETRA-Inter-System-Interface- bzw. -ISI-Nachrichten zum Erstellen eines Kommunikationskanals zwischen dem ersten Teilnehmer (306-A) auf dem GSM-R-Netz und dem zweiten Teilnehmer (308) auf dem TETRA-Netz, wobei das Erstellen des Kommunikationskanals die folgenden Schritte umfasst:
Empfangen, durch ein Interworking-Gateway (102), einer ersten ISUP-Nachricht einer Menge von ISUP-Nachrichten, wobei die erste ISUP-Nachricht eine Anfrage zum Initiieren einer Kommunikation zwischen einer Anker-Mobilvermittlungsstelle bzw. MSC-A (302) und einer Vermittlungs-und-Verwaltungs-Infrastruktur bzw. SwMI (304) angibt und wobei die MSC-A (302) den ersten Teilnehmer (306-A) in dem GSM-R-Netz versorgt und wobei die SwMI (304) den zweiten Teilnehmer (308) in dem TETRA-Netz versorgt und wobei die Menge von ISUP-Nachrichten auf einem ISUP-Protokoll basieren und wobei die Menge von ISUP-Nachrichten eine IAM-Nachricht, eine CPG-Nachricht, eine ACM-Nachricht, eine ANM-Nachricht und eine GSM-Nachricht umfassen;
Auswählen, durch das Interworking-Gateway (102), einer ersten ISI-Nachricht aus einer Menge von ISI-Nachrichten, die der ersten ISUP-Nachricht äquivalent ist, wobei die erste ISI-Nachricht basierend auf einer vordefinierten Abbildung der ersten ISUP-Nachricht zu der ersten ISI-Nachricht ausgewählt wird, wobei die Menge von ISI-Nachrichten auf einem ISI-Protokoll basieren, wobei die Menge von ISI-Nachrichten eine ISI-SETUP-Nachricht, eine ISI-ALERTING-Nachricht, eine ISI-CONNECT-Nachricht, eine ISI-DISCONNECT-Nachricht, eine ISI-TX-GRANTED-Nachricht, eine ISI-TX-DEMAND-Nachricht und eine ISI-TX-CEASED-Nachricht umfasst;
Übertragen, durch das Interworking-Gateway (102), der ersten ISI-Nachricht zu der SwMI (304);
Empfangen, durch das Interworking-Gateway (102), einer zweiten ISI-Nachricht von der SwMI (304), wobei die zweite ISI-Nachricht angibt, dass der zweite Teilnehmer (308) die Anfrage des ersten Teilnehmers (306-A) für die Kommunikation annimmt;
Auswählen, durch das Interworking-Gateway (102), einer zweiten ISUP-Nachricht aus der Menge von ISUP-Nachrichten, die der zweiten ISI-Nachricht äquivalent ist, wobei die zweite ISUP-Nachricht basierend auf der vordefinierten Abbildung der zweiten ISI-Nachricht zu der zweiten ISUP-Nachricht ausgewählt wird; und Übertragen, durch das Interworking-Gateway (102), der zweiten ISUP-Nachricht zu der MSC-A (302);
Abbilden von GSM-R-Mobile-Application-Part-bzw. -MAP-Nachrichten zu den TETRA-Inter-System-Interface- bzw. -ISI-Nachrichten zum Ergreifen einer Aufwärtsstrecke, um Sprachdatenpakete zwischen dem ersten Teilnehmer (306-A) auf dem GSM-R-Netz und dem zweiten Teilnehmer (308) auf dem TETRA-Netz zu übertragen, wobei das Ergreifen der Aufwärtsstrecke die folgenden Schritte umfasst:
Empfangen, durch das Interworking-Gateway (102), einer ersten MAP-Nachricht einer Menge von MAP-Nachrichten, wobei die erste MAP-Nachricht eine Anfrage zum Initiieren einer Kommunikation zwischen der MSC-A und der SwMI (304) angibt und wobei die MSC-A (302) den ersten Teilnehmer in dem GSM-R-Netz versorgt und wobei die SwMI (304) den zweiten Teilnehmer in dem TETRA-Netz versorgt und wobei die Menge von MAP-Nachrichten auf einem MAP-Protokoll basieren, wobei die Menge von MAP-Nachrichten eine FORWARD-GROUP-CALL-SIGNALLING-RELEASE-Nachricht, eine FORWARD_GROUP_CALL_SIGNALLlNG-SEIZE-Nachricht, eine PROCESS-GROUP-CALL-SIGNALLING-Nachricht und eine PREPARE_GROUP_CALL_SIGNALLING-Nachricht umfasst;
Wählen, durch das Interworking-Gateway (102), einer dritten ISI-Nachricht aus der Menge von ISI-Nachrichten, die der ersten MAP-Nachricht äquivalent ist, wobei die dritte ISI-Nachricht basierend auf einer vordefinierten Abbildung der ersten MAP-Nachricht zu der dritten ISI-Nachricht ausgewählt wird, wobei die Menge von ISI-Nachrichten auf dem ISI-Protokoll basieren;
Übertragen, durch das Interworking-Gateway (102), der dritten ISI-Nachricht zu der SwMI (304);
Empfangen, durch das Interworking-Gateway (102), einer vierten ISI-Nachricht von der SwMI (304);
Auswählen, durch das Interworking-Gateway (102), einer zweiten MAP-Nachricht aus der Menge von MAP-Nachrichten, die der vierten ISI-Nachricht äquivalent ist, wobei die zweite MAP-Nachricht basierend auf der vordefinierten Abbildung der vierten ISI-Nachricht zu der zweiten MAP-Nachricht ausgewählt wird; und
Übertragen, durch das Interworking-Gateway, der zweiten MAP-Nachricht zu der MSC-A (302).

2. Verfahren nach Anspruch 1, wobei die IAM-Nachricht und die ISI-SETUP-Nachricht das Erstellen des Kommunikationskanals zwischen dem ersten Teilnehmer (306-A) und dem zweiten Teilnehmer (308) ermöglichen.

3. Verfahren nach Anspruch 1, wobei die ISI-SETUP-Nachricht, die ISI-ALERTING-Nachricht, die ISI-CONNECT-Nachricht durch die SwMI (304) zu dem Interworking-Gateway (102) übertragen werden.

4. Verfahren nach Anspruch 1, wobei die ISI-SETUP-Nachricht, die ISI-ALERTING-Nachricht, die ISI-CONNECT-Nachricht zu der CPG-Nachricht, der ACM-Nachricht bzw. der ANM-Nachricht abgebildet werden und wobei die ISI-TX-GRANTED-Nachricht, die ISI-TX-CEASED-Nachricht und die ISI-TX-DEMAND-Nachricht zu der FORWARD-GROUP-CALL-SIGNALLING-SEIZE-Nachricht, der FORWARD-GROUP-CALL-SIGNALLING-RELEASE-Nachricht und der PROCESS-GROUP-CALL-SIGNALLING-Nachricht abgebildet werden.

5. Verfahren nach Anspruch 4, wobei die Hin-und-Her-Kommunikation durch einen Punkt-zu-Punkt- bzw. PtP-Anruf und/oder einen Sprach-Gruppenanrufdienst bzw. VGCS und/oder einen Sprach-Rundsendedienst bzw. VBS ermöglicht wird.

6. Verfahren nach Anspruch 1, wobei sich das Interworking-Gateway (102) an einem Standort des GSM-R-Netzes oder einem Standard außer dem Standort des GSM-R-Netzes befindet.

7. Verfahren nach Anspruch 1, ferner umfassend Übertragen von Sprachdatenpaketen über den Kommunikationskanal zwischen dem ersten Teilnehmer (306-A) auf dem GSM-R-Netz und dem zweiten Teilnehmer (308) auf dem TETRA-Netz und Freigeben der Aufwärtsstrecke, nachdem die Übertragung der Sprachdatenpakete beendet ist.

8. Interworking-Gateway zum Ermöglichen einer Hin-und-Her-Kommunikation zwischen einem ersten Teilnehmer (306-A) und einen zweiten Teilnehmer (308), wobei sich der erste Teilnehmer (306-A) auf einem Global-System-for-Mobile-Communications-Railway- bzw. GSM-R-Netz befindet und sich der zweite Teilnehmer (308) auf einem Terrestrial-Trunked-Radio- bzw. TETRA-Netz befindet, wobei das Interworking-Gateway Folgendes umfasst:
einen Prozessor (202); und
einen Speicher (206), der mit dem Prozessor (202) gekoppelt ist und Anweisungen speichert, die bei Ausführung durch den Prozessor (202) den Prozessor (202) veranlassen zum:
Abbilden von GSM-R-Integrated-Services-Digital-Network- bzw. -ISDN-User-Part-Nachrichten bzw. -ISUP-Nachrichten zu TETRA-Inter-System-Interface- bzw. -ISI-Nachrichten zum Erstellen eines Kommunikationskanals zwischen dem ersten Teilnehmer (306-A) auf den GSM-R-Netz und dem zweiten Teilnehmer (308) auf dem TETRA-Netz, wobei zum Erstellen des Kommunikationskanals:
Empfangen einer ersten Integrated-Services-Digital-Network- bzw. ISDN-User-Part-Nachricht bzw. ISUP-Nachricht einer Menge von ISUP-Nachrichten, wobei die erste ISUP-Nachricht eine Anfrage zum Initiieren einer Kommunikation zwischen einer Anker-Mobilvermittlungsstelle bzw. MSC-A (302) und einer Vermittlungs-und-Verwaltungs-Infrastruktur bzw. SwMI (304) angibt und wobei die MSC-A (302) den ersten Teilnehmer (306-A) in dem GSM-R-Netz versorgt und wobei die SwMI (304) den zweiten Teilnehmer (308) in dem TETRA-Netz versorgt und wobei die Menge von ISUP-Nachrichten auf einem ISUP-Protokoll basieren und wobei die Menge von ISUP-Nachrichten eine IAM-Nachricht, eine CPG-Nachricht, eine ACM-Nachricht, eine ANM-Nachricht und eine GSM-Nachricht umfassen;
Auswählen einer ersten Inter-System-Interface- bzw. ISI-Nachricht aus einer Menge von ISI-Nachrichten, die der ersten ISUP-Nachricht äquivalent ist, wobei die erste ISI-Nachricht basierend auf einer vordefinierten Abbildung der ersten ISUP-Nachricht zu der ersten ISI-Nachricht ausgewählt wird, wobei die Menge von ISI-Nachrichten auf einem ISI-Protokoll basieren, wobei die Menge von ISI-Nachrichten eine ISI-SETUP-Nachricht, eine ISI-ALERTING-Nachricht, eine ISI-CONNECT-Nachricht, eine ISI-DISCONNECT-Nachricht, eine ISI-TX-GRANTED-Nachricht, eine ISI-TX-DEMAND-Nachricht und eine ISI-TX-CEASED-Nachricht umfasst;
Übertragen der ersten ISI-Nachricht zu der SwMI (304);
Empfangen einer zweiten ISI-Nachricht von der SwMI (304), wobei die zweite ISI-Nachricht angibt, dass der zweite Teilnehmer die Anfrage des ersten Teilnehmers (306-A) für die Kommunikation annimmt;
Auswählen einer zweiten ISUP-Nachricht aus der Menge von ISUP-Nachrichten, die der zweiten ISI-Nachricht äquivalent ist, wobei die zweite ISUP-Nachricht basierend auf der vordefinierten Abbildung der zweiten ISI-Nachricht zu der zweiten ISUP-Nachricht ausgewählt wird; und
Übertragen der zweiten ISUP-Nachricht zu der MSC-A (302);
Abbilden von GSM-R-Mobile-Application-Part- bzw. -MAP-Nachrichten zu den TETRA-Inter-System-Interface- bzw. -ISI-Nachrichten zum Ergreifen einer Aufwärtsstrecke, um Sprachdatenpakete zwischen dem ersten Teilnehmer (306-A) auf dem GSM-R-Netz und dem zweiten Teilnehmer (308) auf dem TETRA-Netz zu übertragen, wobei zum Ergreifen der Aufwärtsstrecke:
Empfangen einer ersten MAP-Nachricht einer Menge von MAP-Nachrichten, wobei die erste MAP-Nachricht eine Anfrage zum Initiieren einer Kommunikation zwischen der MSC-A (302) und der SwMI (304) angibt und wobei die MSC-A (302) den ersten Teilnehmer in dem GSM-R-Netz versorgt und wobei die SwMI (304) den zweiten Teilnehmer in dem TETRA-Netz versorgt und wobei die Menge von MAP-Nachrichten auf einem MAP-Protokoll basieren, wobei die Menge von MAP-Nachrichten eine FORWARD-GROUP-CALL-SIGNALLING-RELEASE-Nachricht, eine FORWARD_GROUP_CALL_SIGNALLING-SEIZE-Nachricht, eine PROCESS-GROUP-CALL-SIGNALLING-Nachricht und eine PREPARE_GROUP_CALL_SIGNALLING-Nachricht umfasst;
Auswählen einer dritten ISI-Nachricht aus der Menge von ISI-Nachrichten, die der ersten MAP-Nachricht äquivalent ist, wobei die dritte ISI-Nachricht basierend auf einer vordefinierten Abbildung der ersten MAP-Nachricht zu der dritten ISI-Nachricht ausgewählt wird, wobei die Menge von ISI-Nachrichten auf dem ISI-Protokoll basieren;
Übertragen der dritten ISI-Nachricht zu der SwMI (304);
Empfangen einer vierten ISI-Nachricht von der SwMI (304);
Auswählen einer zweiten MAP-Nachricht aus der Menge von MAP-Nachrichten, die der vierten ISI-Nachricht äquivalent ist, wobei die zweite MAP-Nachricht basierend auf der vordefinierten Abbildung der vierten ISI-Nachricht zu der zweiten MAP-Nachricht ausgewählt wird; und Übertragen, durch das Interworking-Gateway (102), der zweiten MAP-Nachricht zu der MSC-A (302).

9. Interworking-Gateway (102) nach Anspruch 8, wobei sich das Interworking-Gateway an einem Standort des GSM-R-Netzes oder einem Standort außer dem Standort des GSM-R-Netzes befindet.

10. Interworking-Gateway nach Anspruch 8, ferner umfassend, dass der Prozessor (202) die programmierten Anweisungen ausführt zum Übertragen von Sprachdatenpaketen über den Kommunikationskanal zwischen dem ersten Teilnehmer (306-A) auf dem GSM-R-Netz und dem zweiten Teilnehmer (308) auf dem TETRA-Netz und Freigeben der Aufwärtsstrecke, nachdem die Übertragung der Sprachdatenpakete beendet ist.

11. Computerprogramm, das Anweisungen umfasst, die, wenn das Programm durch einen Computer ausgeführt wird, veranlassen, dass der Computer alle Schritte des Verfahrens nach den Ansprüchen 1 oder 7 ausführt.

## Revendications

1. Procédé de facilitation d'une communication bidirectionnelle entre un premier abonné (306-A) et un deuxième abonné (308), le premier abonné (306-A) étant sur un réseau Global System for Mobile Communications Railway, GSM-R et le deuxième abonné (308) étant sur un réseau Terrestrial Trunked Radio, TETRA, ce procédé comprenant :
le mappage de messages GSM-R Integrated Services Digital Network, ISDN User Part, ISUP, avec des messages TETRA Inter System Interface, ISI pour l'établissement d'un canal de communication entre le premier abonné (306-A) sur le réseau GSM-R et le deuxième abonné (308) sur le réseau TETRA, l'établissement du canal de communication comprenant les étapes suivantes :
réception, par une passerelle inter-réseau (102), d'un premier message ISUP d'un ensemble de messages ISUP, le premier message ISUP indiquant une requête pour l'initiation d'une communication entre un Mobile Switching Centre d'ancrage, MSC-A (302) et une Switching and Management Infrastructure, SwMI (304) et le MSC-A (302) desservant le premier abonné (306-A) dans le réseau GSM-R et le SwMI (304) desservant le deuxième abonné (308) dans le réseau TETRA et l'ensemble de messages ISUP étant basés sur un protocole ISUP et l'ensemble de messages ISUP comprenant un message IAM, un message CPG, un message ACM, un message ANM et un message GSM ;
sélection, par la passerelle inter-réseau (102) d'un premier message ISI parmi un ensemble de messages ISI, équivalent au premier message ISUP, le premier message ISI étant sélectionné sur la base d'un mappage prédéfini du premier message ISUP avec le premier message ISI, l'ensemble de messages ISI étant basés sur un protocole ISI, l'ensemble de messages ISI comprenant un message ISI-SETUP, un message ISI-ALERTING, un message ISI-CONNECT, un message ISI-DISCONNECT, un message ISI TX-GRANTED, un message ISI TX-DEMAND et un message ISI TX-CEASED ;
transmission, par la passerelle inter-réseau (102), du premier message ISI à la SwMI (304) ;
réception, par la passerelle inter-réseau (102), d'un deuxième message ISI en provenance de la SwMI (304), le deuxième message (ISI indiquant que le deuxième abonné (308) accepte la requête du premier abonné (306-A) demandant la communication ;
sélection, par la passerelle inter-réseau (102), d'un deuxième message ISUP parmi l'ensemble de messages ISUP, équivalent au deuxième message ISI, le deuxième message ISUP étant sélectionné sur la base du mappage prédéfini du deuxième message ISI avec le deuxième message ISUP ; et
transmission, par la passerelle inter-réseau (102), du deuxième message ISUP au MSC-A (302) ;
mappage de messages GSM-R Mobile Application Part, MAP, avec les messages TETRA Inter System Interface, ISI, pour la saisie d'une liaison montante afin de transmettre des paquets de données vocales entre le premier abonné (306-A) sur le réseau GSM-R et le deuxième abonné (308) sur le réseau TETRA, la saisie de la liaison montante comprenant les étapes suivantes :
réception, par la passerelle inter-réseau (102), d'un premier message MAP d'un ensemble de messages MAP, le premier message MAP indiquant une requête pour l'initiation d'une communication entre le MSC-A et la SwMI (304) et le MSC-A (302) desservant le premier abonné dans le réseau GSM-R et la SwMI (304) desservant le deuxième abonné dans le réseau TETRA, et l'ensemble de messages MAP étant basés sur un protocole MAP, l'ensemble de messages MAP comprenant un message FORWARD GROUP CAL SIGNALLING RELEASE, un message FORWARD_GROUP_CALL_SIGNALLING SEIZE, un message PROCESS GROUP CALL SIGNALLING et un message PREPARE_GROUP_CALL_SIGNALLING ;
sélection, par la passerelle inter-réseau (102), d'un troisième message ISI parmi l'ensemble de messages ISI, équivalent au premier message MAP, le troisième message ISI étant sélectionné sur la base d'un mappage prédéfini du premier message MAP avec le troisième message ISI, l'ensemble de messages ISI étant basés sur le protocole ISI ;
transmission, par la passerelle inter-réseau (102), du troisième message ISI à la SwMI (304) ;
réception, par la passerelle inter-réseau (102), d'un quatrième message ISI en provenance de la SwMI (304) ;
sélection, par la passerelle inter-réseau (102), d'un deuxième message MAP parmi l'ensemble de messages MAP, équivalent au quatrième message ISI, le deuxième message MAP étant sélectionné sur la base du mappage prédéfini du quatrième message ISI avec le deuxième message MAP ; et
transmission, par la passerelle inter-réseau, du deuxième message MAP au MSC-A (302).

2. Procédé selon la revendication 1, dans lequel le message IAM et le message ISI-SETUP facilitent l'établissement du canal de communication entre le premier abonné (306-A) et le deuxième abonné (308).

3. Procédé selon la revendication 1, dans lequel le message ISI-SETUP, le message ISI-ALERTING et le message ISI-CONNECT sont transmis par la SwMI (304) à la passerelle inter-réseau (102).

4. Procédé selon la revendication 1, dans lequel le message ISI-SETUP, le message ISI-ALERTING et le message ISI-CONNECT sont mappés respectivement au message CPG, au message ACM et au message ANM et dans lequel le message ISI TX-GRANTED, le message ISI TX-CEASED et le message ISI-TX DEMAND sont mappés au message FORWARD GROUP CALL SIGNALLING SEIZE, au message FORWARD GROUP CALL SIGNALLING RELEASE et au message PROCESS GROUP CALL SIGNALLING.

5. Procédé selon la revendication 4, dans lequel la communication bidirectionnelle est facilitée par au moins un Point-to-Point PtP Call, un Voice Group Call Service VGCS et un Voice Broadcast Service VBS.

6. Procédé selon la revendication 1, dans lequel la passerelle inter-réseau (102) est située à un endroit du réseau GSM-R ou à un endroit différent de l'endroit du réseau GSM-R.

7. Procédé selon la revendication 1, comprenant en outre la transmission de paquets de données vocales par l'intermédiaire du canal de communication entre le premier abonné (306-A) sur le réseau GSM-R et le deuxième abonné (308) sur le réseau TETRA et la libération de la liaison montante après la fin de la transmission des paquets de données vocales.

8. Passerelle inter-réseau permettant de faciliter une communication bidirectionnelle entre un premier abonné (306-A) et un deuxième abonné (308), le premier abonné (306-A) étant sur un réseau Global System for Mobile Communications Railway, GSM-R et le deuxième abonné (308) étant sur un réseau Terrestrial Trunked Radio, TETRA, la passerelle inter-réseau comprenant :
un processeur (202) ; et
une mémoire (206), couplée au processeur (202), stockant des instructions qui, lorsqu'elles sont exécutées par le processeur (202) font en sorte que le processeur (202) :
mappe des messages GSM-R Integrated Service Digital Network, ISDN User Part, ISUP, avec des messages TETRA Inter System Interface, ISI afin d'établir un canal de communication entre le premier abonné (306-A) sur le réseau GSM-R et le deuxième abonné (308) sur le réseau TETRA, moyennant quoi, pour établir le canal de communication :
reçoive un premier message Integrated Service Digital Network, ISDN User Part, ISUP, d'un ensemble de messages ISUP, le premier message ISUP indiquant une requête pour l'initiation d'une communication entre un Mobile Switching Centre d'ancrage, MSC-A (302) et une Switching and Management Infrastructure, SwMI (304) et le MSC-A (302) desservant le premier abonné (306-A) dans le réseau GSM-R et la SwMI (304) desservant le deuxième abonné (308) dans le réseau TETRA et l'ensemble de messages ISUP étant basés sur un protocole ISUP et l'ensemble de messages ISUP comprenant un message IAM, un message CPG, un message ACM, un message ANM et un message GSM ;
sélectionne un premier message ISI parmi un ensemble de messages ISI, équivalent au premier message ISUP, le premier message ISI étant sélectionné sur la base d'un mappage prédéfini du premier message ISUP avec le premier message ISI, l'ensemble de messages ISI étant basés sur un protocole ISI, l'ensemble de messages ISI comprenant un message ISI-SETUP, un message ISI-ALERTING, un message ISI-CONNECT, un message ISI-DISCONNECT, un message ISI TX-GRANTED, un message ISI TX-DEMAND et un message ISI TX-CEASED ;
transmette le premier message ISI à la SwMI (304) ;
reçoive un deuxième message ISI en provenance de la SwMI (304), le deuxième message ISI indiquant que le deuxième abonné (308) accepte la requête du premier abonné (306-A) demandant la communication ;
sélectionne un deuxième message ISUP parmi l'ensemble de messages ISUP, équivalent au deuxième message ISI, le deuxième message ISUP étant sélectionné sur la base du mappage prédéfini du deuxième message ISI avec le deuxième message ISUP ; et
transmette le deuxième message ISUP au MSC-A (302) ;
mappe les messages GSM-R Mobile Application Part, MAP, avec les messages TETRA Inter System Interface, ISI, pour la saisie d'une liaison montante afin de transmettre des paquets de données vocales entre le premier abonné (306-A) sur le réseau GSM-R et le deuxième abonné (308) sur le réseau TETRA, la saisie de la liaison montante comprenant les étapes suivantes :
reçoive un premier message MAP d'un ensemble de messages MAP, le premier message MAP indiquant une requête pour l'initiation d'une communication entre le MSC-A (302) et la SwMI (304) et le MSC-A (302) desservant le premier abonné dans le réseau GSM-R et la SwMI (304) desservant le deuxième abonné dans le réseau TETRA, et l'ensemble de messages MAP étant basés sur un protocole MAP, l'ensemble de messages MAP comprenant un message FORWARD GROUP CALL SIGNALLING RELEASE, un message FORWARD_GROUP_CALL_SIGNALLING SEIZE, un message PROCESS GROUP CALL SIGNALLING et un message PREPARE_GROUP_CALL_SIGNALLING ;
sélectionne un troisième message ISI parmi l'ensemble de messages ISI, équivalent au premier message MAP, le troisième message ISI étant sélectionné sur la base d'un mappage prédéfini du premier message MAP avec le troisième message ISI, l'ensemble de messages ISI étant basés sur le protocole ISI ;
transmette le troisième message ISI à la SwMI (304) ;
reçoive un quatrième message ISI en provenance de la SwMI (304) ;
sélectionne un deuxième message MAP parmi l'ensemble de messages MAP, équivalent au quatrième message ISI, le deuxième message MAP étant sélectionné sur la base du mappage prédéfini du quatrième message ISI avec le deuxième message MAP ; et
transmission, par la passerelle inter-réseau (102), du deuxième message MAP au MSC-A (302).

9. Passerelle inter-réseau (102) selon la revendication 8, la passerelle inter-réseau étant située à un endroit du réseau GSM-R ou à un endroit différent du réseau GSM-R.

10. Passerelle inter-réseau (102) selon la revendication 8, comprenant en outre le fait que le processeur (202) exécute les instructions programmées afin de transmettre les paquets de données vocales par l'intermédiaire du canal de communication entre le premier abonné (306-A)sur le réseau GSM-R et le deuxième abonné (308) sur le réseau TETRA et libère la liaison montante après la fin de la transmission des paquets de données vocales.

11. Programme informatique comprenant des instructions qui, lorsque le programme est exécuté par un ordinateur, font en sorte que l'ordinateur exécute les étapes du procédé selon les revendications 1 à 7.
